# EUROPEAN PATENT APPLICATION

(11) **EP 2 595 096 A1**
(43) Date of publication of application: **22.05.2013**
(21) Application number: 12162690.7
(22) Date of filing: 30.03.2012
(51) Int. Cl.: G06Q 10/00, G06Q 10/10

(54) **System and method for synchronizing calendar information**

(30) Priority: 17.11.2011 KR 20110120014
(71) Applicant: Samsung Electronics Co., Ltd., Suwon-si, Gyeonggi-do, 443-742 (KR)
(72) Inventor: Woo, Hyung-Duck, 442-742 Gyeonggi-do (KR); Cho, Yong-Sul, 442-742 Gyeonggi-do (KR)
(74) Representative: Hutter, Jacobus Johannes

(57) **Abstract**

A system for synchronizing calendar information includes a mobile terminal for requesting public holiday information of an identified country from a server if the country is identified by a time zone setting value; and a server for storing public holiday information of different countries and transmitting the public holiday information of an identified country, requested by the mobile terminal.

## Description

### BACKGROUND

### Field of the Invention

The present invention relates generally to a system and method for synchronizing calendar information, and more particularly, to a calendar information synchronizing system and method capable of automatically synchronizing public holiday information of a country in a mobile terminal.

### Description of the Related Art

When a mobile terminal is initially sold and put into use, public holiday information of a country where they are sold is typically stored in a calendar DataBase (DB) thereof. Therefore, while on a business trip abroad, a user of a mobile terminal may not know information about public holidays or temporary public holidays of the country he or she is traveling, because the user may get only the public holiday information provided by the mobile terminal.

Accordingly, it becomes an inconvenience that the user should check public holidays or temporary public holidays of the new temporary country of use and then input information thereabout in the mobile terminal, one by one.

### SUMMARY OF THE INVENTION

The present invention provides a calendar information synchronizing system and method capable of automatically synchronizing public holiday information of a country in a mobile terminal.

An exemplary embodiment of the present invention is to provide a calendar information synchronizing system and method capable of automatically synchronizing public holiday information of a country in a mobile terminal upon setting of Greenwich Mean Time (GMT) time in the mobile terminal.

In accordance with one aspect of the present invention, a system for synchronizing calendar information includes a mobile terminal for requesting public holiday information of an identified country from a server if the country is identified by a time zone setting value; and a server for storing public holiday information of different countries and transmitting the public holiday information of an identified country to a mobile terminal upon request by the mobile terminal.

In accordance with another aspect of the present invention, a method for synchronizing calendar information includes, if a country is identified by a time zone setting value in a mobile terminal, requesting public holiday information of the identified country from a server by the mobile terminal; and upon receiving a request for public holiday information of the country from the mobile terminal, detecting by the server the requested public holiday information of the country and transmitting the detected public holiday information of the country to the mobile terminal.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 illustrates a configuration of a calendar information synchronizing system according to an embodiment of the present invention;
FIG. 2 illustrates a structure of a mobile terminal in a calendar information synchronizing system according to an embodiment of the present invention;
FIG. 3 illustrates a process of synchronizing calendar information in a mobile terminal according to an embodiment of the present invention; and
FIG. 4 illustrates a time zone setting screen used in the process shown in FIG. 3.

Throughout the drawings, use of the same drawing reference numerals will be understood to refer to the same or corresponding elements, features and structures.

### DETAILED DESCRIPTION

Preferred embodiments of the present invention will now be described in detail with reference to the accompanying drawings. In the following description, specific details such as detailed configuration and components are provided merely to assist the overall understanding of exemplary embodiments of the present invention. Therefore, it should be apparent to those of ordinary skill in the art that various changes and modifications of the embodiments described herein can be made without departing from the scope and spirit of the invention. In addition, descriptions of well-known functions and constructions are omitted for clarity and conciseness.

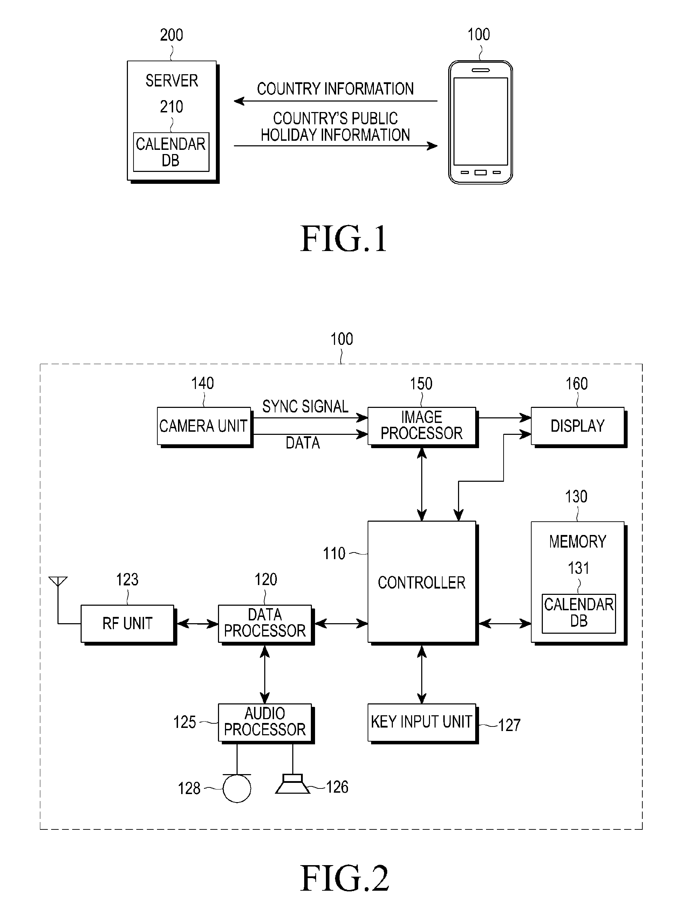

FIG. 1 illustrates a configuration of a calendar information synchronizing system according to an embodiment of the present invention.

Referring to FIG. 1, the calendar information synchronizing system includes a server 200 and a mobile terminal 100.

The server 200 has a calendar DataBase (DB) 210 for storing public holiday information of different countries, and periodically updates the public holiday information of different countries, stored in the calendar DB 210. Upon receiving a request for public holiday information of a country from the mobile terminal 100, the server 200 detects the public holiday information of a country, requested by the mobile terminal 100, from the public holiday information of different countries stored in the calendar DB 210, and transmits the detected public holiday information to the mobile terminal 100.

The server 200 transmits the public holiday information of a country to the mobile terminal 100 in a vCalendar format.

The vCalendar format, a standard format for exchanging schedule information, is a format in which a user may comprehensively manage his or her own schedule by processing the received information with a Personal Information Management System (PIMS) program.

If a country is identified by a time zone setting value selected by a user, the mobile terminal 100 requests public holiday information of the identified country from the server 200, and upon receiving the requested public holiday information of the country in the vCalendar format from the server 200, the mobile terminal 100 stores the received public holiday information therein.

FIG. 2 illustrates a structure of the mobile terminal 100 in the calendar information synchronizing system according to an embodiment of the present invention.

Referring to FIG. 2, a Radio Frequency (RF) unit 123 is responsible for wireless communication of the mobile terminal 100. The RF unit 123 includes an RF transmitter (not separately shown) for up-converting a frequency of a transmission signal and amplifying the up-converted signal, and an RF receiver (not separately shown) for low-noise-amplifying a received signal and down-converting a frequency of the low-noise-amplified signal. A data processor 120 includes a transmitter (not separately shown) for encoding and modulating the transmission signal, and a receiver (not separately shown) for demodulating and decoding the received signal. In other words, the data processor 120 may include a modulator/demodulator (modem) and a coder/decoder (codec). The codec includes a data codec for processing packet data and the like, and an audio codec for processing audio signals such as voice. An audio processor 125 plays on a speaker 126 the received audio signals output from the audio codec in the data processor 120, and transfers the transmission audio signals picked up by a microphone 128 to the audio codec in the data processor 120.

A key input unit 127 includes alphanumeric keys (not separately shown) for inputting alphanumeric information and function keys (not separately shown) for setting various functions.

A memory 130 may include a program memory and a data memory. The program memory may store programs for controlling the overall operation of the mobile terminal 100, as well as, according to an embodiment of the present invention, programs for automatically synchronizing public holiday information of a country upon setting of Greenwich Mean Time (GMT) time in the mobile terminal 100. In addition, the data memory temporarily stores the data generated during execution of the programs.

In accordance with an embodiment of the present invention, the memory 130 also includes a calendar DB 131 for storing all data used in a calendar application, as well as public holiday information that may also be stored in the calendar DB 131.

In addition, the memory 130 stores country information corresponding to respective ones of a plurality of cities classified by GMT time.

A controller 110 controls the overall operation of the mobile terminal 100.

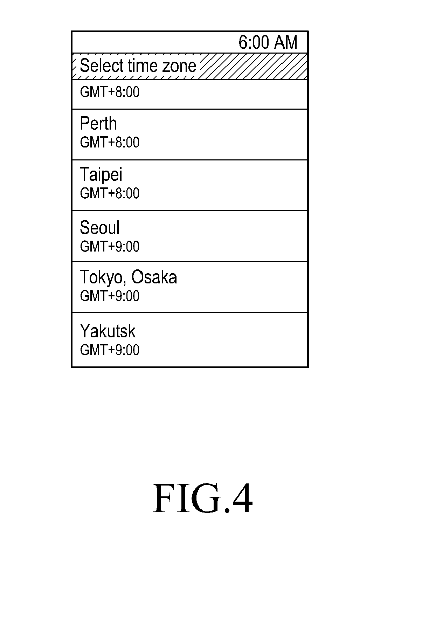

In accordance with an embodiment of the present invention, the controller 110 displays the cities classified by GMT time on a time zone setting screen (as shown in FIG. 4). If a country of a city selected from among the cities classified by GMT time is identified, the controller 110 requests public holiday information of the identified country from the server 200.

Upon receiving the requested public holiday information of the country from the server 200, the controller 110 stores the received public holiday information of the country in the calendar DB 131 of the memory 130.

For completing the description of the mobile terminal 100, it is noted that a camera 140 of conventional design is provided, which includes a camera sensor for capturing image data and converting the captured optical signal into an electrical signal, and a signal processor for converting the analog image signal captured by the camera sensor into digital data. The camera sensor may be a Charged-Coupled Device (CCD) or Complementary Metal-Oxide Semiconductor (CMOS) sensor, and the signal processor may be realized by a Digital Signal Processor (DSP). The camera sensor and the signal processor may be implemented in an integrated or separated manner.

An image processor 150 of conventional design performs Image Signal Processing (ISP) for displaying the image signal output from the camera 140 on a display 160. The ISP includes gamma correction, interpolation, spatial variations, image effects, image scaling, Automatic White Balance (AWB), Automatic Exposure (AE), Automatic Focus (AF), etc. The image processor 150 processes the image signal output from the camera 140 on a frame-by-frame basis, and outputs the frame image data so as to match the characteristics and size of the display 160. The image processor 150 with a video codec compresses the frame image data displayed on the display 160 using a preset coding scheme, and decompresses the compressed frame image data into its original frame image data. The video codec may be any one of a Joint Photographic Experts Group (JPEG) codec, a Moving Picture Experts Group-4 (MPEG4) codec, a Wavelet codec, etc. The image processor 150 also has an On-Screen Display (OSD) function, and under control of the controller 110, may output OSD data so as to match the characteristics and size of the display 160.

The display 160 displays the image signal output from the image processor 150 on a screen, and displays user data output from the controller 110. The display 160 may employ a Liquid Crystal Display (LCD), and in this case, the display 160 may include an LCD controller, a memory for storing image data, and an LCD panel. When implemented in a touch-screen manner, the LCD may also serve as an input unit. In this case, keys such as the key input unit 127 may be displayed on the display 160.

In accordance with an embodiment of the present invention, the display 160 may display in a time zone setting screen the cities classified by GMT time.

In addition, the display 160 may display public holiday information corresponding to the dates selected in a calendar application mode of operation for the mobile terminal 100.

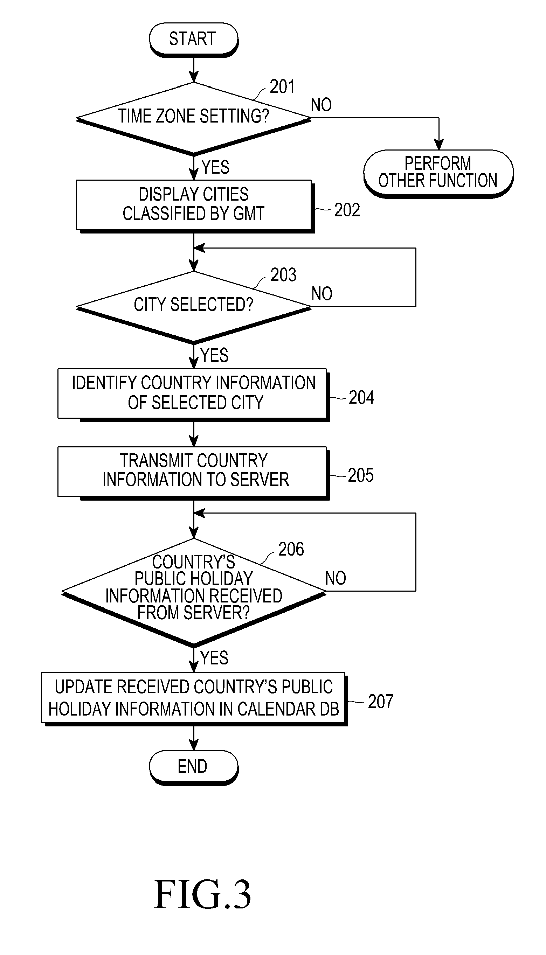

FIG. 3 illustrates a process of synchronizing calendar information in a mobile terminal according to an embodiment of the present invention, and FIG. 4 illustrates a time zone setting screen as used in the process of FIG. 3.

The calendar information synchronizing process will be described in detail below with reference to FIGs. 1 and 2 together.

Referring to FIG. 3, if time zone setting is selected in the mobile terminal 100 in step 201, then in step 202 the controller 110 displays a time zone setting screen as shown in FIG. 4, on display 160.

The cities classified by GMT time are displayed on the time zone setting screen in step 202. If a city is selected by the user from among the cities classified by GMT time in step 203, the controller 110 identifies country information of the selected city stored in the memory 130 in step 204, and transmits the identified country information to the server 200 in step 205.

Upon receiving a request for public holiday information of the country from the mobile terminal 100, the server 200 detects the public holiday information of the country, requested by the mobile terminal 100, from the calendar DB 210 of the server 200, and transmits the detected public holiday information of the country to the mobile terminal 100 in a vCalendar format which is the standard format for exchanging scheduling information.

Upon receiving in step 206 the requested public holiday information of the country from the server 200n, the controller 110 stores the received public holiday information of the country in the calendar DB 131 of the memory 130 in step 207.

Through this operation, the user of the mobile terminal may automatically synchronize public holiday information of the country by merely setting GMT time included already in the mobile terminal, thereby making it possible to conveniently display the public holiday information of the country for the user.

Although the proposed operation automatically synchronizes public holiday information of a country by setting GMT time on the time zone setting time, it is also possible to configure a separate menu capable of allowing a user to select a country, and to request public holiday information of the country selected by the user from the server.

As is apparent from the foregoing description, the proposed calendar information synchronizing system and method may automatically synchronize public holiday information upon setting of GMT time while the user moves between countries, making it possible for the user to more efficiently use the calendar function of the mobile terminal.

In addition, the proposed calendar information synchronizing system and method may directly identify public holiday information of different countries, thereby allowing the user to conveniently manage his or her schedules while on a business trip abroad. Additionally, the proposed system and method may link the synchronized public holiday information to another function of the mobile terminal, for example, a Wake-up feature to turn off Wake-up alarm in the synchronized holidays of the country.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Furthermore, the proposed calendar information synchronizing system and method may optionally support even irregular temporary public holidays such as election days, lunar public holidays, and variable national holidays. While on a business trip abroad and having a mobile terminal incorporating the present invention, the user may more easily make up work schedules, since he or she may know in advance the public holiday information of the country the user is traveling, and the user may easily determine whether there are separate events, as he or she can check national holidays of the country he or she is traveling.

While the invention has been shown and described with reference to certain exemplary embodiments thereof, it will be understood by those skilled in the art that various changes in form and details may be made therein without departing from the spirit and scope of the invention, which is defined only by the appended claims and their equivalents.

## Claims

1. A system for synchronizing calendar information in a mobile terminal, **CHARACTERIZED BY**:
a mobile terminal (100) for requesting public holiday information of an identified country from a server (200) if the country is identified by a time zone setting value; and
a server (200) for storing public holiday information of different countries and upon receipt of a request for public holiday information of a country from the mobile terminal, transmitting the public holiday information of the country to the mobile terminal.

2. The system of claim 1, **CHARACTERIZED IN THAT** the mobile terminal comprises:
a memory (130) including a calendar DataBase (DB) (131) for storing public holiday information; and
a controller (110) for identifying a country of a selected city if the city is selected from among cities that are classified by Greenwich Mean Time (GMT) time on a time zone setting screen, transmitting information about the identified country to the server, and storing public holiday information of the country received from the server in the calendar DB of the memory.

3. The system of claim 1, **CHARACTERIZED IN THAT** the mobile terminal receives public holiday information of the country from the server (200) in a vCalendar format which is a standard format for exchanging schedule information.

4. The system of claim 1, **CHARACTERIZED IN THAT** upon receiving a request for public holiday information of the country from the mobile terminal, the server (200) detects the requested public holiday information of the country from public holiday information of different countries that are stored in a calendar DB (210) of the server, and transmits the detected public holiday information of the country to the mobile terminal.

5. The system of claim 1, **CHARACTERIZED IN THAT** the server transmits the public holiday information of the country to the mobile terminal in a vCalendar format which is a standard format for exchanging schedule information.

6. A method for synchronizing calendar information in a mobile terminal, **CHARACTERIZED BY**:
if a country is identified by a time zone setting value in a mobile terminal (100), requesting public holiday information of the identified country from a server (200), by the mobile terminal; and
upon receiving a request for public holiday information of the country from the mobile terminal, detecting by the server the requested public holiday information of the country, and transmitting the detected public holiday information of the identified country to the mobile terminal.

7. The method of claim 6, **CHARACTERIZED IN THAT** the requesting comprises:
displaying cities that are classified by Greenwich Mean Time (GMT) time on a time zone setting screen of the mobile terminal;
identifying a country of a selected city, if a city is selected from among the cities classified by the GMT time;; and
requesting public holiday information of the identified country from the server.

8. The method of claim 6, **CHARACTERIZED BY**:
upon receiving by the mobile terminal of the public holiday information of the country transmitted from the server, storing the received public holiday information in a calendar DataBase (131) of a memory (130) of the mobile terminal .

9. The method of claim 8, **CHARACTERIZED IN THAT** the mobile terminal receives public holiday information of the country from the server in a vCalendar format which is a standard format for exchanging schedule information.

10. The method of claim 6, **CHARACTERIZED IN THAT** the transmitting comprises:
upon receiving a request for public holiday information of the country from the mobile terminal, detecting by the server the requested public holiday information of the country from public holiday information of different countries, stored in a calendar DB (210) of the server; and transmitting the detected public holiday information of the country to the mobile terminal.

11. The method of claim 6, **CHARACTERIZED IN THAT** the server transmits the public holiday information of the country to the mobile terminal in a vCalendar form which is a standard format for exchanging schedule information.

12. A method for synchronizing calendar information in a mobile terminal, **CHARACTERIZED BY**:
using a time zone setting value in the mobile terminal (100) to identify a country;
requesting public holiday information of the identified country from a server (200); and
receiving at the mobile terminal public holiday information of the identified country transmitted from the server.

13. The method of claim 12, **CHARACTERIZED IN THAT**:
upon receiving the public holiday information of the identified country from the server, storing the received public holiday information in a calendar DataBase (DB) of a memory (130) of the mobile terminal.

14. The method of claim 13, **CHARACTERIZED IN THAT** the using step comprises:
identifying a country of a selected city, when the city is selected from among a plurality of cities that are classified by Greenwich Mean Time (GMT) time on a time zone setting screen of the mobile terminal,
transmitting information about the identified country to the server, and
storing in a calendar DB memory (131) of the mobile terminal the public holiday information of the country received from the server (200).

15. A mobile terminal capable of having synchronized calendar information, **CHARACTERIZED BY**:
means for transmitting a request for public holiday information of an identified country, to a server; and
a controller (110) for identifying, using a display of the mobile terminal, a country of a selected city if the city is selected from among cities that are classified by Greenwich Mean Time (GMT) time on a time zone setting screen of the display, wherein
upon receiving the public holiday information of the identified country from the server, storing the received public holiday information a memory (131).
